# EUROPÄISCHE PATENTSCHRIFT

(11) **EP 1 133 656 B1**
(45) Veröffentlichungstag und Bekanntmachung des Hinweises auf die Patenterteilung: **26.03.2003**
(21) Anmeldenummer: 99971903.2
(22) Anmeldetag: 09.11.1999
(51) Int. Cl.: F21L 4/02, F21V 23/04

(54) **TASCHENLAMPE**
POCKET LAMP
LAMPE DE POCHE

(30) Priorität: 10.11.1998 DE 29820081 U
(43) Veröffentlichungstag der Anmeldung: 19.09.2001
(73) Patentinhaber: Gutmann, Max, 81377 München (DE)
(72) Erfinder: Gutmann, Max, 81377 München (DE)
(74) Vertreter: Vogeser, Werner, Dipl.-Ing.
(86) Internationale Anmeldenummer: EP9908576
(87) Internationale Veröffentlichungsnummer: WO00028258

(56) Entgegenhaltungen:
- WO-A-94/13022
- US-A- 2 194 992
- US-A- 2 538 332
- US-A- 5 617 304

## Beschreibung

### I. Anwendungsgebiet

Die Erfindung betrifft Taschenlampen, und zwar insbesondere solche Taschenlampen, bei denen das Gehäuse wenigstens teilweise aus elektrisch leitendem Material, insbesondere aus Aluminium oder Titan, besteht, so daß dieser elektrisch leitende Teil des Gehäuses Bestandteil des Stromkreises der Lampe ist.

### II. Technischer Hintergrund

Dabei sind insbesondere wiederum diejenigen Formen von Taschenlampen von Bedeutung, die im allgemeinen als Stabtaschenlampe bezeichnet werden, bei denen also der Grundkörper des Gehäuses aus einem Rohrstück besteht, in welches die Batterien, die ebenfalls runden Querschnitt besitzen, eingeschoben sind. Am einen Ende des Grundkörpers befindet sich die Leuchte, das andere Ende des Grundkörpers ist durch eine Abschlußkappe dicht verschlossen. Die Verbindung der einzelnen Teile erfolgt dabei vorzugsweise über Gewinde und einen eingelegten Dichtring, um das Eindringen von Feuchtigkeit zu verhindern.

Grundsätzlich ist die vorliegende Erfindung jedoch auch auf andere Formen von Taschenlampen anwendbar, beispielsweise Taschenlampen mit rechteckigem Gehäuse, bei denen sich die Leuchte auf der Vorderseite befindet und auf der Rückseite eine Klappe oder Ähnliches am Gehäuse vorhanden ist zum Einlegen der Batterien.

Aus der US-A-2,538,332 ist ein Gehäuseteil zum Verschließen des Gehäuses einer Taschenlampe bekannt, die eine primäre Leuchte und einen primären Schalter aufweist, wobei das Gehäuseteil wenigstens eine sekundäre Leuchte aufweist und ein sekundärer Schalter zum An- und Ausschalten der sekundären Leuchte vorhanden ist. In einem Schaltzustand ist die sekundäre Leuchte in Reihe zur primären Leuchte geschaltet, wogegen im anderen Schaltzustand der sekundäre Schalter die sekundäre Leuchte kurzschließt. Der Mechanismus zur Betätigung des sekundären Schalters ist dabei jedoch relativ kompliziert aufgebaut.

Aus der US-A-2,194,992 ist ebenfalls eine gattungsgemäße Taschenlampe bekannt, deren Schaltmechanismus für den sekundären Schalten ebenso kompliziert aufgebaut ist.

### III. Darstellung der Erfindung

### a) Technische Aufgabe

Es ist daher die Aufgabe gemäß der vorliegenden Erfindung, eine Taschenlampe zu schaffen, deren Schaltmechanismus für den sekundären Schalter wesentlich einfacher aufgebaut ist.

### b) Lösung der Aufgabe

Diese Aufgabe wird durch die Merkmale des Anspruchs 1 gelöst. Vorteilhafte Ausführungsformen ergeben sich aus den Unteransprüchen.

Der sekundäre Schalter kann eine Federzunge umfassen, die zur Kontaktfläche des Gehäuseteiles beabstandet ist und beim Aufschrauben des Gehäuseteiles auf das Gehäuse der Taschenlampe mit dem metallenen Gehäuseteil in elektrischen Kontakt bringbar ist, wodurch die sekundäre Leuchte kurzgeschlossen wird.

Bei einer bevorzugten Ausführungsform kann dadurch, daß als sekundäre Leuchte eine Leuchtdiode, insbesondere eine weiße Leuchtdiode, und/oder eine farbige Diode, Infrarot-Diode, ein Infrarot-Laser verwendet wird, die Lebensdauer der Batterie bei Benutzung der Leuchtdiode anstelle der primären Leuchte drastisch verlängert werden bzw. die sekundäre Leuchte brennt noch lange Zeit, wenn die Spannung bereits für die primäre Leuchte zu gering ist und diese deshalb nicht mehr leuchtet.

Um eine Zeigefunktion zu bieten, liegt der Stromverbrauch einer diesbezüglich als Sekundärleuchte verwendeten Laserdiode ebenfalls deutlich niedriger als die ansonsten bekannte teilweise Abschirmung der Primärleuchte durch eine Blende oder Vorsatzlinse.

Durch die Anordnung der sekundären Leuchte in Reihenschaltung im Stromkreis der primären Leuchte ergibt sich ein besonders einfacher schaltungstechnischer und damit auch mechanischer Aufbau des erfindungsgemäßen Gehäuseteiles und der gesamten Taschenlampe.

Das Gehäuseteil, in welchem die eine oder die mehreren sekundären Leuchten untergebracht sind, kann entweder ein Gehäuseteil sein, welches bei einer vorhandenen Taschenlampe gegen ein bereits dort standardmäßig vorhandenes Gehäuseteil ausgetauscht werden kann, beispielsweise die rückseitige Abschlußkappe bei einer Stabtaschenlampe, oder dem Batteriefachdeckel bei einer sonstigen Taschenlampe.

Bei dem Gehäuseteil kann es sich jedoch auch um ein zusätzliches Teil für eine bereits vorhandene Taschenlampe handeln, beispielsweise ein Ergänzungsteil, welches bei einer Stabtaschenlampe zwischen dem Grundkörper des Gehäuses und der hinteren Abschlußkappe zwischengeschraubt wird oder Ähnliches.

Im folgenden soll bei der konkreten Beschreibung der Erfindung auf eine Verwirklichung in Form einer Abschlußkappe bei einer Stabtaschenlampe abgestellt werden, welche gegen die normale Abschlußkappe ausgetauscht wird und gegenüber dem Grundkörper mittels Verschrauben in ein dort vorhandenes Innengewinde befestigt wird.

### c) Ausführungsbeispiele

Derartige Ausführungsformen gemäß der Erfindung sind im folgenden anhand der Figuren beispielhaft näher beschrieben. Es zeigen - jeweils im Längsschnitt durch das entsprechende Gehäuseteil sowie mit der zugehörigen elektrischen Schaltung
- Fig. 1:: eine Abschlußkappe mit einer Leuchtdiode als Sekundärleuchte,
- Fig. 2:: eine Abschlußkappe mit einer Laserdiode als Sekundärleuchte,
- Fig. 3:: eine Abschlußkappe mit Leuchtdiode und Laserdiode, also zwei sekundären Leuchten,
- Fig. 4a:: eine Längsschnittdarstellung durch eine andere Bauform des Gehäuseteiles,
- Fig. 4b und 4c:: Detaildarstellungen der Drehplatte,
- Fig. 4d:: das Schaltbild des Gehäuseteiles der Figuren 4a - 4c, und
- Figuren 5:: eine weitere Bauform der Erfindung.

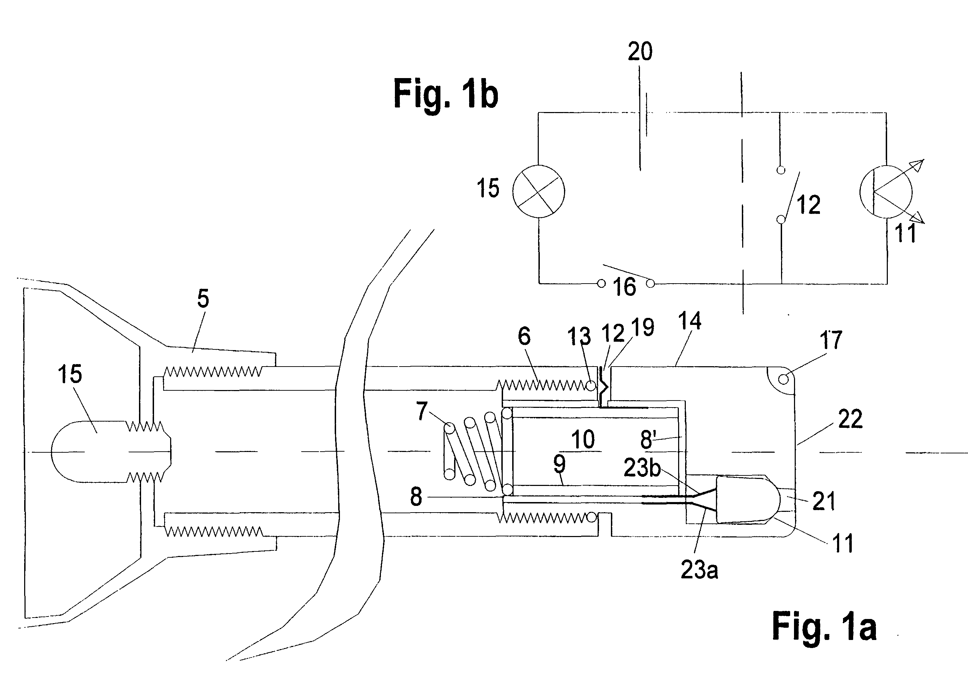

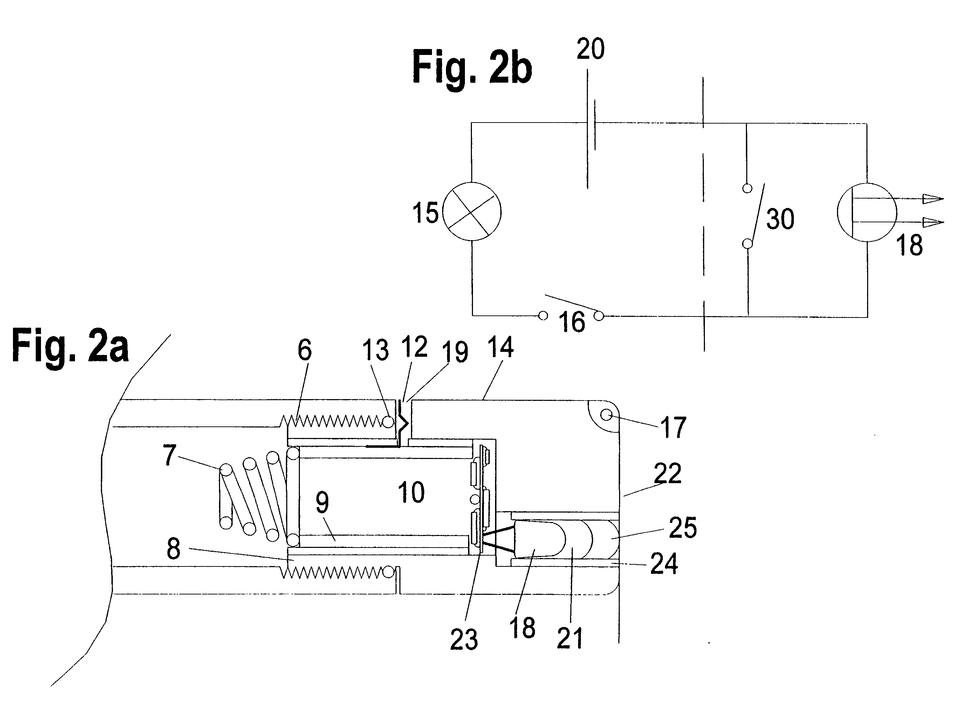

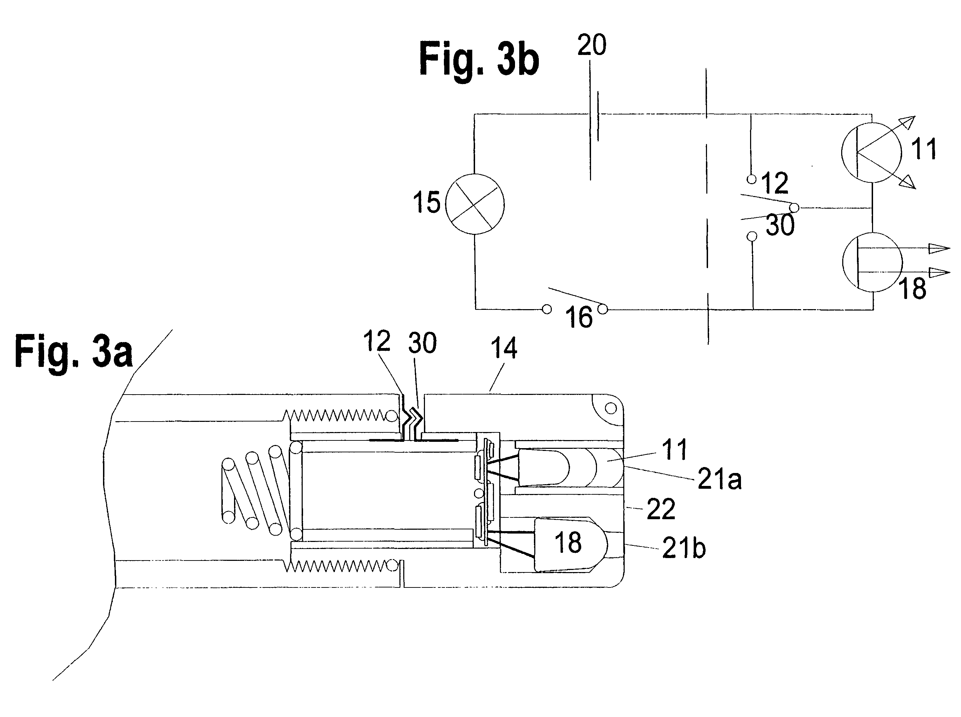

Während in Fig. 1a die vollständige Taschenlampe im Längsschnitt dargestellt ist, sind in den Figuren 2a und 3a lediglich die erfindungsgemäß ausgebildeten Gehäuseteile in Form von Abschlußkappen zeichnerisch dargestellt.

Im folgenden werden die bei allen drei Ausführungsbeispielen übereinstimmenden Merkmale gemäß der Figuren 1a, 2a und 3a beschrieben. Diese bestehen darin, daß die Abschlußkappe einen einstückigen, topfförmigen Grundkörper 14 aus Metall umfaßt, der mit der offenen Seite seines Innenraumes 10 gegen den Rest der Taschenlampe weisend am hinteren Ende des Rohrteiles 5 der Stabtaschenlampe befestigt wird. Zu diesem Zweck weist der Grundkörper 14 in dem Endbereich des offenen Endes ein Außengewinde 6 auf, welches in ein Innengewinde 6' am Ende des Rohrteiles 5 des Gehäuses der Taschenlampe einschraubbar ist. Zwischen beiden ist ein Dichtring 13 zur Abdichtung angeordnet.

Der Grundkörper 14 weist dabei häufig am rückseitigen, verschlossenen Ende eine Öse 17 zum Befestigen einer Seilschlaufe oder Ähnlichem auf.

Zwischen dem Innenraum 10 und der hinteren, geschlossenen äußeren Stimfläche 22 existiert eine Verbindungsöffnung 21, die insbesondere in Längsrichtung der Stabtaschenlampe verläuft und beispielsweise durch Bohren hergestellt sein kann.

Dieser Verbindungsöffnung 21, die vorzugsweise eine Verjüngung zur Stirnfläche 22 hin aufweist, ist entsprechend den Abmessungen der dort unterzubringenden Leuchtdiode 11 dimensioniert, die so eingesetzt ist, daß sie mit ihrem vorderen Ende gegen die Verjüngung anliegt und daß deren beiden Kontaktfahnen 23a, 23b in den Innenraum 10 hinein vorstehen.

Die üblicherweise an einer solchen Abschlußkappe vorhandene Batteriefeder 7, eine konisch ausgebildete Spiralfeder, stützt sich dabei vorzugsweise nicht direkt gegenüber den Boden des Innenraumes 10 des Grundkörpers 14 ab, sondern die Innenwandung und der Boden dieses Innenraumes 10 ist mit einer Isolierschicht 8, beispielsweise einem topfförmigen Kunststoffteil, ausgekleidet, in welches ein elektrisch leitendes inneres Metallrohr eingesetzt ist, welches bis nahe an die offene Seite des Innenraumes 10 heranreicht, und dessen nach außen gerichtete Stirnfläche der Abstützung der Batteriefeder 7 dient und vorzugsweise mit dieser unverlierbar verbunden ist.

Die eine Kontaktfahne 23a der Leuchtdiode 11 endet zwischen der Isolierschicht 8 und dem elektrisch leitenden Grundkörper 14 der Abschlußkappe, und wird dabei insbesondere durch die paßgenau topfförmige Isolierschicht 8 in Kontakt an den Grundkörper 14 gehalten.

Die andere Kontaktfahne 23b ist durch eine Bohrung im Topfboden der Isolierschicht 8 geführt und endet zwischen der Isolierschicht 8 und dem inneren Metallrohr 9, wobei wiederum durch das geringe Spiel oder gar dem Preßsitz zwischen dem inneren Metallrohr 9 und der demgegenüber außen liegenden Isolierschicht 8 ein ständiger und inniger elektrisch leitender Kontakt zwischen dieser Kontaktfahne 23b und dem inneren Metallrohr 9 sichergestellt ist.

Des weiteren erstreckt sich sowohl durch die Wandung des Grundkörpers 14 in dem axialen Erstreckungsbereich des Innenraums 10 als auch an gleicher Stelle durch die Isolierschicht 8 eine Querbohrung 19 hindurch, die im wesentlichen radial verläuft. In dieser Querbohrung 19 liegt eine in Längsrichtung der Bohrung verlaufende Federzunge 12, die an ihrem innenseitigen Ende gekröpft ist und - wie die Kontaktfahne 23b - zwischen dem inneren Metallrohr 9 und der demgegenüber außen liegenden Isolierschicht 8 in elektrisch leitendem, innigem Kontakt zu dem inneren Metallrohr 9 gehalten wird. In der unbeaufschlagten Ruhestellung, wie in Fig. 1a dargestellt, liegt der radial nach außen kragende Teil der Federzunge 12 nicht an den Wänden der Querbohrung 19, also an dem metallischen Grundkörper 14 an, trotz einer V-förmigen Kröpfung im Verlauf der Federzunge 12.

Da jedoch die Querbohrung 19 insbesondere am rückseitigen Ende des Außengewindes 6 angeordnet ist, ragt der Grundkörper 14 auf der vom Außengewinde 6 abgewandten Seite der Querbohrung 19 radial weiter nach außen als auf der anderen, durch das Außengewinde 6 gebildeten Seite. Beim Aufschrauben der Abschlußkappe auf das Rohrteil 5 des Lampengehäuses drückt somit das hintere stirnseitige Ende des Rohrteiles 5 noch nicht gegen die Federzunge 12 und somit hat die Federzunge 12 noch keinen Kontakt zur Wandung der Querbohrung und damit mit dem Grundkörper 14, was ansonsten insbesondere dadurch verhindert ist, daß die Querbohrung in der topfförmigen Isolierung einen geringeren Querschnitt besitzt als die Querbohrung in der Wandung des Grundkörpers 14.

Die Federzunge 12 dient somit als Schalter in der elektrischen Schaltung der Taschenlampe, wie sie in Fig. 1b dargestellt ist:

Im Stromkreis der Primärleuchte 15 sind der primäre Schalter 16, also der bereits ursprünglich vorhandene Schalter zum Ein- und Ausschalten der Primärleuchte 15, die Batterie 20 und die Sekundärleuchte 11 in Reihe geschaltet. Der Schalter in Form der Federzunge 12 oder eines anderen Schalters kann die sekundäre Leuchte, die Leuchtdiode 11, kurzschließen.

Wenn also - siehe Fig. 1a - die Federzunge 12 keinen Kontakt zum Grundkörper 14 hat, und darüber hinaus die Taschenlampe insgesamt durch Schließen des primären Schalters 16 aktiviert ist, fließt der Strom sowohl über die Leuchtdiode 11 als auch über die primäre Leuchte 15, wobei das gesamte metallene Gehäuse der Taschenlampe, also das Rohrstück 9 ebenso wie der Grundkörper 14 der Abschlußkappe, als elektrischer Leiter dient. Dennoch leuchtet in diesem Fall nur die Leuchtdiode 11, da - bedingt durch den geringen Strom, der über die Diode fließt - die primäre Leuchte der Lampe nicht zum Leuchten angeregt wird und somit auch keinen wesentlichen Stromverbrauch bewirkt. Vielmehr wird die nichtleuchtende Leuchte 15 in diesem Zustand als Vorwiderstand für die Diode benutzt, obwohl bei Bedarf auch zusätzliche Vorschaltwiderstände in der Abschlußkappe, etwa im Innenraum 10 des Grundkörpers 14 der Abschlußkappe, angeordnet werden können.

Schraubt man dagegen die Abschlußkappe soweit in das Rohrstück 9 hinein, daß deren Stirnseite die Federzunge 12 gegen den metallenen Grundkörper 14 in elektrischen Kontakt bringt, so ist dadurch der Schalter 12 gemäß Fig. 1b geschlossen. Es fließt der Strom der Batterie 20 nur über den primären Schalter 16 und die primäre Leuchte 15, nicht jedoch über die Leuchtdiode 11. Die primäre Leuchte 15 leuchtet also dann, wenn in diesem Zustand der primäre Schalter 16 geschlossen ist, ansonsten leuchtet die Taschenlampe nicht.

Die Lösung gemäß Fig. 2a und 2b unterscheidet sich von derjenigen der Fig. 1a, 1b dadurch, daß anstelle einer Leuchtdiode 11 eine Laserdiode 18 verwendet ist, die zur besseren Fokussierung in der Verbindungsöffnung 21 an deren vorderen Ende eine Optik 25 in Form einer Linse aufweist. Diese wird vorzugsweise mit Hilfe eines Rohreinsatzes 24 in Pressung in der Verbindungsöffnung 21 fixiert.

Die beiden Kontaktfahnen der Laserdiode 18 stehen mit einer Anschaltelektronik 23 in Verbindung, die auf einer Platine im Bodenbereich des Innenraums 10 angeordnet ist, und deren beide Anschlüsse einerseits mit der Federzunge 12 und andererseits mit dem metallenen Grundkörper 14 in Verbindung stehen. Zu diesem Zweck kann die Isolierung des Innenraumes 10 anstelle durch eine topfförmige Isolierschicht auch durch eine rohrförmige Isolierschicht abisoliert sein. Eine andere Möglichkeit besteht darin, den Kontakt zum Grundkörper 14 herzustellen, indem die entsprechende Kontaktfahne - entweder der Anschaltelektronik 23 oder direkt der Laserdiode 18 - wieder zwischen dem Rohreinsatz 24, der aus isolierendem Material bestehen muß, und dem Innenumfang der Verbindungsöffnung 21 zu fixieren.

Die elektrische Schaltung der Fig. 2b ist derjenigen der Fig. 1b identisch bis auf die Tatsache, daß anstelle der Leuchtdiode eine Laserdiode 18 verwendet ist. Die Anschaltelektronik ist in der Schaltung gemäß Fig. 2b nicht separat dargestellt und soll Bestandteil der dort eingezeichneten Laserdiode 18 sein.

Die Lösung gemäß Fig. 3 weist sowohl eine Leuchtdiode 11 als auch eine Laserdiode 18 in parallelen Verbindungsöffnungen 21a, 21b auf, die wiederum beide in der hinteren Stirnfläche 22 enden. Die elektrischen Verbindungen der Schaltfahnen entsprechen denjenigen in den Figuren 1a bzw. 2a. Da jedoch die Leuchtdiode 11 und die Laserdiode 18 unabhängig voneinander separat geschaltet werden können, sind hierfür zwei im Ruhezustand zueinander beabstandete Federzungen 30 in der Querbohrung 19 notwendig, von denen die eine die Leuchtdiode 11 und die andere die Laserdiode 18 schaltet. Durch zunehmendes Verschrauben der Abschlußkappe gegen - das in Fig. 3a nicht mehr dargestellte - Rohrstück 5 wird zunächst die eine und dann die andere der beiden Federzungen 12, 30 in Kontakt mit dem Grundkörper 14 gebracht, und dadurch - je nach elektrischer Zuordnung - zunächst die Leuchtdiode 11 und anschließend zusätzlich die Laserdiode 18 abgeschaltet, so daß nur eine der beiden Sekundärleuchten alleine schaltbar ist. In der Regel wird dies eher die Laserdiode 18 sein.

Dadurch ist die in Fig. 3b ersichtliche Schaltung gegeben, wonach in Reihe mit der primären Leuchte 15 außer den primären Schalter 16 und der Batterie 20 die Leuchtdiode 11 und die Laserdiode 18 geschaltet sind.

Die Leuchtdiode 11 ist dabei durch die Federzunge 12 überbrückbar, die Laserdiode 18 durch die Federzunge 30.

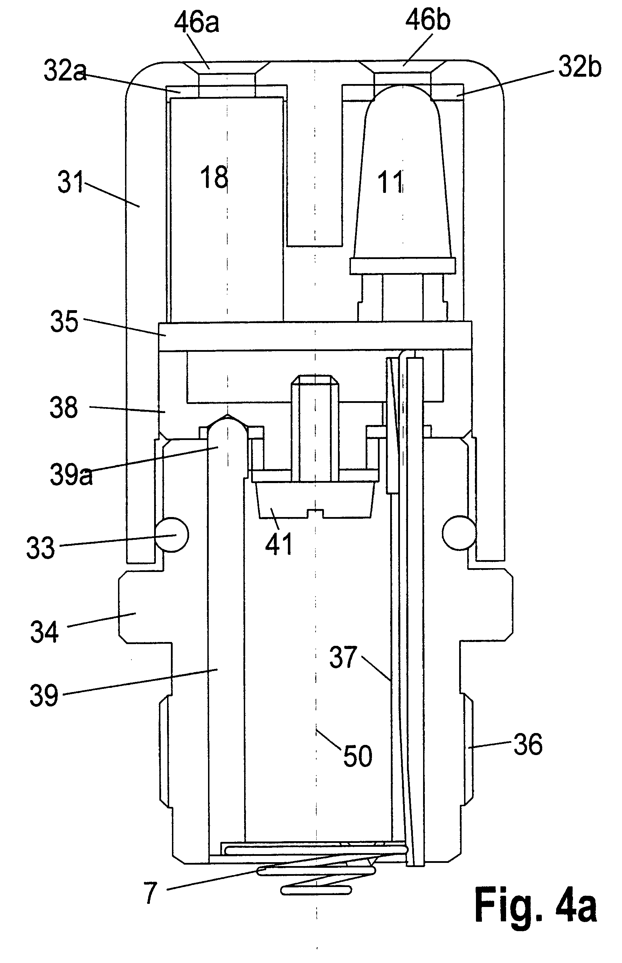

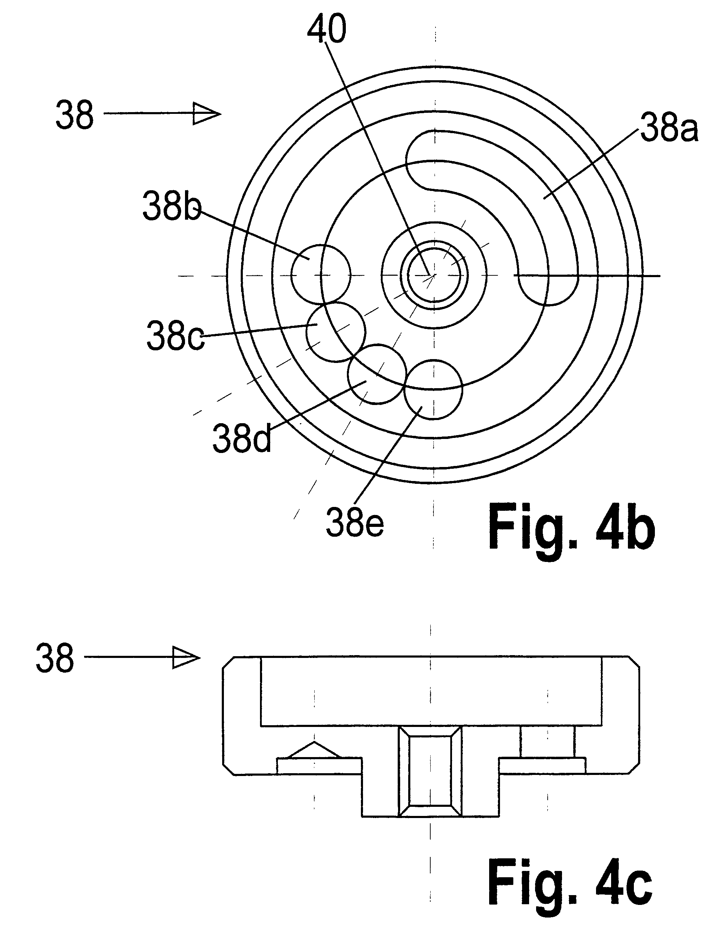

Fig. 4a zeigt das fertig montierte Gehäuseteil separat. Zur Verbindung mit einer stabförmigen Taschenlampe wird es mit dem Außengewinde 36 in das Innengewinde des stabförmigen Hauptteiles des Gehäuses der Taschenlampe eingeschraubt.

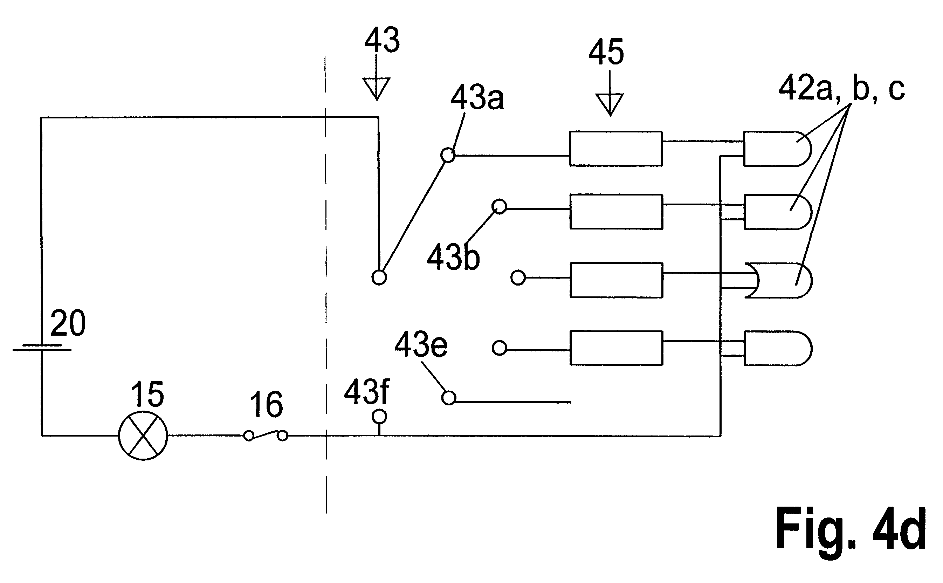

Dieses Außengewinde 36 befindet sich am einen Ende des Außenumfanges eines topfförmigen Grundkörpers 34, dessen anderes, im wesentlichen geschlossenes, Ende die wiederum topfförmige Kappe 31 trägt, welche Bestandteil einer Dreheinheit ist und gegenüber dem Grundkörper 34 drehbar ist. Dieses Drehteil dient gleichzeitig als Drehschalter, welcher als Sekundärschalter 43 gemäß dem Schaltbild der Fig. 4d, die in der Kappe 31 untergebrachten Sekundärleuchten 42a, 42b, ... steuert. An solchen Sekundärleuchten 42, 42b sind in der konkreten Darstellung der Fig. 4a eine weißte Leuchtdiode 11 sowie eine Laserdiode 18 dargestellt. Je nach Größe der Stablampe und damit der Kappe 31 können jedoch auch 3, 4 oder mehr Sekundärleuchten 42a, 42b, 42c, 42d ... vorgesehen werden, wie im Schaltbild der Fig. 4d angedeutet.

Der Fig. 4d ist ferner zu entnehmen, daß einer der Schaltkontakte 43a, 43b, 43c, 43d, 43e ... ein blinder Schaltkontakt ist, der blind endet, also mit keiner Sekundärleuchte verbunden ist, und somit dem Unterbrechen des gesamten Stromkreises dient:

Wie der Schaltplan zeigt, handelt es sich insgesamt nur um einen einzigen Stromkreis, in dem sich - in Reihenschaltung - die ein oder mehreren Batterien 20 als Spannungsquelle, die primäre Leuchte 15 und deren primärer Schalter 16 ebenso befinden wie der Sekundärschalter 43, der in diesem Fall als Drehschalter ausgebildet ist, und wahlweise mit jeweils einem der Schaltkontakte 43a, 43b, 43c, ... in Verbindung steht.

Bei Verbindung mit einer Sekundärleuchte z. B. 42a und der entsprechenden Stellung des Drehschalters auf den Schaltkontakt 43a leuchtet diese Sekundärleuchte 42a nur dann, wenn zusätzlich auch der primäre Schalter 16 geschlossen ist, der eigentlich zum Schalten der Primärleuchte 15 dient. Da die Sekundärleuchten 42a, 42b, 42c, mithin also auch die in diesem Fall geschaltete Sekundärleuchte 42a, über einen wesentlich größeren Widerstand als die primäre Leuchte 15 verfügt, ist der im Kreislauf fließende Strom so gering, daß die Primärleuchte 15 nicht leuchtet und damit auch keinen nennenswerten Strom verbraucht.

Um allein mit dem Sekundärschalter 43 die Lampe ebenfalls vollständig ausschalten zu können, so daß auch weder eine der Sekundärleuchten 42a, 42b, 42c, ... noch die Primärleuchte 15 leuchtet, ist der blinde Sekundärkontakt 43e vorgesehen. Der Sekundärkontakt 43f dient dazu, den Stromkreis unter Umgehung der Sekundärleuchten 42a, 42b, 42c, ... zu überbrücken, so daß dann nur die Primärleuchte 15 als einziger Verbraucher im Stromkreis liegt und - bei geschlossenem Primärschalter 16 - leuchtet.

Dabei ist zwischen jedem Schaltkontakt z. B. 43a und der entsprechenden Sekundärleuchte z. B. 42a die dieser Sekundärleuchte zugeordnete Sekundärelektronik 45a angeordnet.

In der konkreten Bauform des Gehäuseteiles, wie in den Figuren 4a - 4c dargestellt, befinden sich die Sekundärelektroniken 45a, 45b, 45c auf der Leiterplatte 35, die quer zur Längsrichtung 50 im Abstand zu den Austrittsöffnungen 46a, 46b in der Stirnseite der Kappe angeordnet ist. Im Freiraum dazwischen befinden sich die Sekundärleuchten 42a, 42b, ..., in diesem Fall eine Leuchtdiode 11 und eine Laserdiode 18, jeweils fluchtend und ausgerichtet zu der jeweiligen Austrittsöffnung 46a, 46b, und demgegenüber abgedichtet mittels ringförmigen Dichtungen 32, 32b, und elektrisch leitend mit den Sekundärelektroniken 45a, 45b auf der Leiterplatte 35 verbunden.

Auf der von den Sekundärleuchten, also Leuchtdiode 11 und Laserdiode 18, abgewandten Rückseite der Leiterplatte 35 sind die Schaltkontakte 43a, 43b, ... des Sekundärschalters 43 angeordnet. Beabstandet zur Rückseite und ebenfalls drehfest mit der Kappe 31 verbunden befindet sich in dieser eine ebenfalls quer zur Längsrichtung 50 angeordnete Drehplatte 38. Diese weist eine Zentralöffnung 40 auf, die dem Hindurchstecken einer Schraube 41 und Verschrauben mit einer entsprechenden Zentralöffnung in der Stirnwand des ebenfalls topfförmigen Grundkörpers 34 dient, welcher in die freie Stirnseite der Kappe 31 hineinragt. Eine Abdichtung zwischen beiden ist über einen dazwischen angeordneten Dichtring 33 gegeben, der dennoch eine Drehung der aus Kappe 31, Leiterplatte 35 und Drehplatte 38 bestehenden Dreheinheit um die Längsrichtung 50 gegenüber dem Grundkörper 34 ermöglicht. Der Grundkörper 34 ist seinerseits mittels des Gewindes 36 so fest in das in Fig. 4a nicht dargestellte Gehäuse der Stabtaschenlampe eingeschraubt, daß er mit diesem drehfest verbunden ist, und trotz der Drehung der Dreheinheit, insbesondere der Kappe 31, demgegenüber nicht mitdreht.

Im Inneren des ebenfalls topfförmigen Grundkörpers 34 ist eine Hülse 39 angeordnet, die eng am Innenumfang der Grundkörpers sitzt und aus elektrisch nicht leitendem Material, beispielsweise Kunststoff, besteht. An der zum freien Ende des Grundkörpers 34 hin weisenden Stirnfläche stützt sich die spiralförmige Batteriefeder 37 ab, die im montierten Zustand gegen die Batterien der Stablampe drückt.

An einer Stelle des Umfanges weist die Hülse 39 einen in Längsrichtung 50 verlaufenden Kontaktstift 37 aus elektrisch leitendem Material auf, der mit seinem einen Ende mit der Batteriefeder 7 in Verbindung steht und mit seinem anderen Ende durch eine Durchgangsöffnung einerseits die Stimwand des Grundkörpers 34 durchdringt und andererseits auch die in Längsrichtung davor positionierte Drehplatte 38.

Die in Fig. 4b in der Aufsicht im Detail dargestellte Drehplatte durchdringt der Kontaktstift 37 dabei durch ein Langloch 38a, welches wogenförmig und konzentrisch zu dessen Zentralöffnung 40 angeordnet ist. Die Drehbarkeit der Dreheinheit, insbesondere der Kappe 31 gegenüber dem Grundkörper 34 ist dabei auf das Winkelsegment des Langloches 38a beschränkt.

Die Aufsicht auf die Drehplatte 38 der Fig. 4b zeigt diese Drehplatte in Blickrichtung der Fig. 4a von unten, also vom Grundkörper 34 her betrachtet. Die Rastvertiefungen 38b, die insbesondere kegelförmige Senkbohrungen sind, sind dabei ebenfalls entlang einer Bogenlinie konzentrisch zur Zentralbohrung 40 an dieser Unterseite angeordnet. Diese dienen zum Einrasten eines Rastkopfes 39a, der Teil der Hülse 39 ist und sich an einer Stelle des Umfanges durch eine entsprechende weitere Durchgangsöffnung der Stirnwand des Grundkörpers 34 hindurch erstreckt und je nach Drehlage die Kappe 31 dabei in eine der Rastvertiefungen 38b einrastet und damit formschlüssig die entsprechende Schaltstellung des Drehschalters 43 hält, die jeweils auch einer Kontaktierung einer der Schaltkontakte 43a, 43b, ... auf der Rückseite der Platine 35 durch den Kontaktstift 37 entspricht. Aufgrund der Eigenelastizität der in der Regel aus Kunststoff hergestellten Drehplatte 38 ist ein Weiterdrehen trotz der auf dem Rastkopf 39a lastenden axialen Vorspannung, hervorgerufen durch die Batteriefeder 7, möglich. Die Größe der Vorspannung wird weiter durch das Maß des Festziehens der Schraube 41 bei der Montage bestimmt.

in der Bauform der Fig. 4a erfolgt der Rückfluß des Stromes von der Leiterplatte 35 insbesondere über die Drehplatte 38, die aus elektrisch leitendem Material besteht zu dem aus ebenfalls elektrisch leitendem Material bestehenden Grundkörper 34 und von dort über das Gewinde 36 in das aus ebenfalls elektrisch leitendem Material bestehende stabförmige Gehäuse der Stablampe.

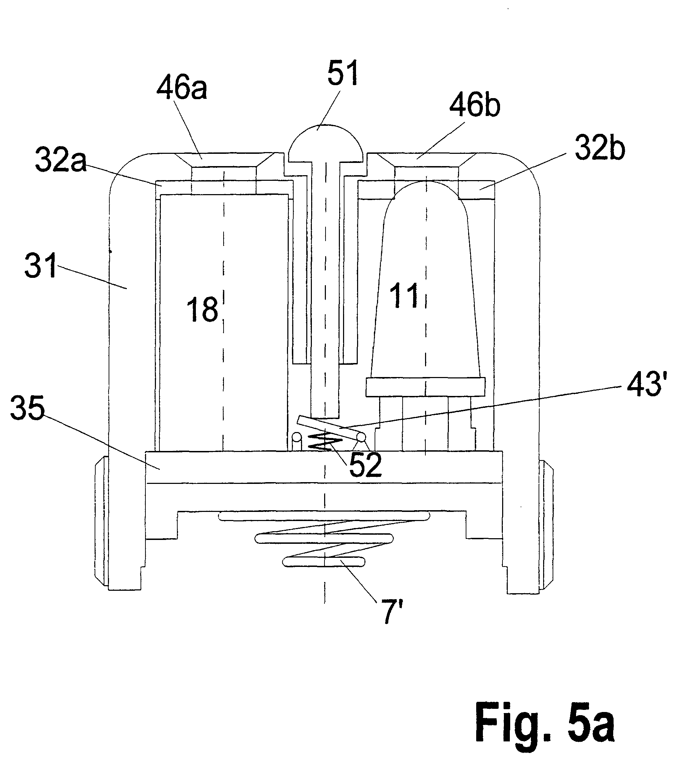

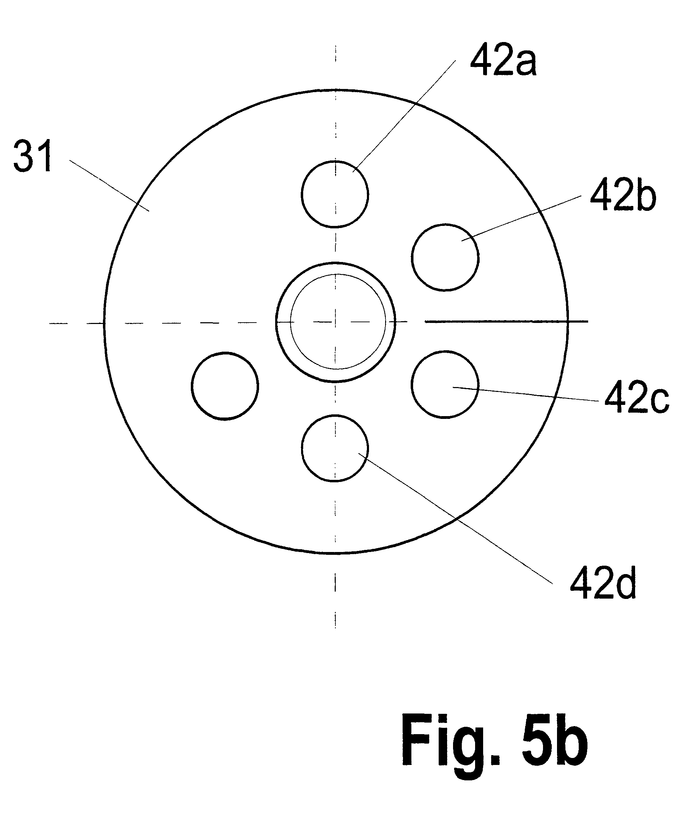

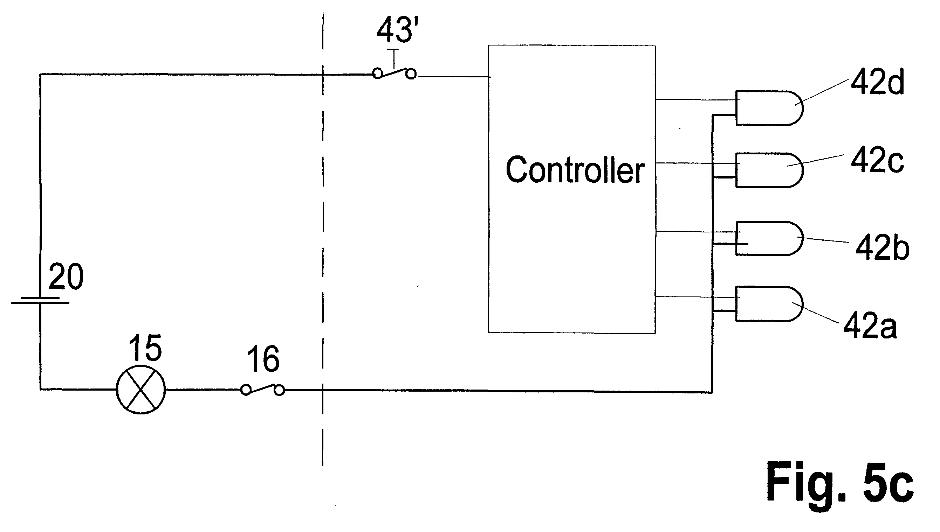

Die Figuren 5 zeigen eine weitere Bauform gemäß einem Ausführungsbeispiel der Erfindung.

Fig. 5c zeigt dabei den Schaltplan, wonach im Kreis der primären Leuchte 15 und dem zugehörigen primären Schalter 16 in Reihe auch der Sekundärschalter 43' für die Sekundärleuchten 42a, 42b, ... angeordnet ist. Diese sind zu dem Primärkreis jeweils parallel geschaltet über einen Controller, so daß mittels nur eines einzigen sekundären Schalters 43' durch mehrfaches Tasten nacheinander das Aufleuchten der gewünschten Sekundärleuchte 42a, 42b, 42c oder 42d eingestellt wird oder eingestellt wird, daß keine Sekundärleuchte leuchtet.

Die Fig. 5a zeigt im Längsschnitt den Grundaufbau einer solchen Kappe 31, die - in Übereinstimmung mit der Darstellung der Figuren 4a - ein Außengewinde 36 zum Einschrauben in das Gehäuse der Taschenlampe aufweist sowie Austrittsöffnungen 46a, 46b, ..., die in der Stirnfläche der Kappe 31 auf einem Kreisbogen angeordnet sind und hinter denen die entsprechenden sekundären Leuchten, beispielsweise eine Leuchtdiode 11 oder eine Laserdiode 18, angeordnet sind, die mit einer in der Kappe quer angeordneten Leiterplatte 35 leitend verbunden sind.

Im Unterschied zur Lösung der Fig. 4a ist in Fig. 5a diese Leiterplatte 35 auf der von den sekundären Leuchten gegenüberliegenden Rückseite von einer Feder 7' gegenüber den Batterien der nicht dargestellten Lampe über ein vermittelndes, stabiles Zwischenteil mechanisch abgestützt wird.

Das Schalten der gewünschten sekundären Leuchte erfolgt dabei über einen zentralen Taster 51, der aus der Stirnfläche der Kappe 31 in der Mitte vorsteht und mit seinem nach innen ragenden freien Ende den sekundären Schalter 43' auf der Leiterplatte 35 betätigt, welcher über eine Feder 52 in die geöffnete Stellung vorgespannt ist und den Widerstand für den Taster 51 bildet.

Diese Lösung hat den Vorteil, daß wenige mechanische Bauelemente, nämlich lediglich der sekundäre Schalter 43' und dessen Taster 51, benötigt werden, und darüber hinaus auch die sekundären Leuchten benutzt werden können, wenn die Batteriespannung der Lampe bereits zu niedrig ist, um die primäre Leuchte 15 zum Leuchten zu bringen.

Fig. 5b zeigt die Aufsicht auf die Stirnfläche der Kappe mit dem zentral angeordneten Taster 51 und dem darum herum auf einer Kreisbogenlinie angeordneten sekundären Leuchten 42a, 42b, ...

### BEZUGSZEICHENLISTE

- 5: Rohrteil
- 6, 6': Außen-/Innengewinde
- 7: Batteriefeder
- 8: Isolierschicht
- 9: inneres Metallrohr
- 10: Innenraum
- 11: Leuchtdiode
- 12: Federzunge
- 13: Dichtring
- 14: Grundkörper
- 15: primäre Leuchte
- 16: primäre Schalter
- 17: Öse
- 18: Laserdiode
- 19: Querbohrung
- 20: Batterie
- 21: Verbindungsöffnung
- 22: Stirnfläche
- 23a, 23b: Kontaktfahnen
- 24: Rohreinsatz
- 25: Linse
- 30: Federzunge

- 31: Kappe
- 32a, 32b: Dichtung
- 33: Dichtring
- 34: Grundkörper
- 35: Leiterplatte
- 36: Gewinde
- 37: Kontaktstift
- 38: Drehplatte
- 38a: Langloch
- 39: Hülse
- 39a: Rastkopf
- 40: Zentralöffnung
- 41: Schraube
- 42a, 42b, 42c: Sekundäreleuchten
- 43: Sekundärschalter
- 44: Sekundärkontakte
- 45: Sekundärelektroniken
- 46a, 46b: Austrittsöffnungen
- 50: Längsrichtung
- 51: Taster
- 52: Feder

## Patentansprüche

1. Taschenlampe mit einem Gehäuse (5), einer primären Leuchte (15), einem primären Schalter (16), einem Gehäuseteil (14), welches eine sekundäre Leuchte (11, 18, 42) aufweist, zum Verschließen des Gehäuses (5), sowie einem sekundären Schalter (12) zum An- und Ausschalten der sekundären Leuchte (12), wobei
- die wenigstens eine sekundäre Leuchte (11, 18, 42) im Stromkreis der primären Leuchte (15) in Reihe zu dieser geschaltet ist und der sekundäre Schalter (12) im geschlossenen Zustand die sekundäre Leuchte (11, 18, 42) kurzschließt, **dadurch gekennzeichnet, daß**
- die wenigstens eine sekundäre Leuchte (11, 18, 42) maximal ein Zehntel des Strombedarfs der primären Leuchte (15) hat und daß
- die wenigstens eine sekundäre Leuchte (11, 18, 42) eine Leuchtdiode ist.

2. Taschenlampe nach Anspruch 1,
**dadurch gekennzeichnet, daß**
die wenigstens eine sekundäre Leuchte eine Leuchte mit maximal einem Fünfzigstel des Strombedarfes der primären Leuchte ist.

3. Taschenlampe nach einem der vorhergehenden Ansprüche,
**dadurch gekennzeichnet, daß**
alle Leuchten von einer gemeinsamen Gleichstromquelle, insbesondere einer Batterie, mit Energie versorgt werden.

4. Taschenlampe nach einem der vorhergehenden Ansprüche,
**dadurch gekennzeichnet, daß**
das Gehäuse ein rohrförmiges Gehäuse ist und die primäre Leuchte an der einen Stirnseite des rohrförmigen Gehäuses angeordnet ist und das Gehäuseteil ein Zwischenstück zwischen dem rohrförmigen Gehäuse und der rückseitigen Abschlußkappe des Gehäuses darstellt.

5. Taschenlampe nach einem der vorhergehenden Ansprüche,
**dadurch gekennzeichnet, daß**
das Gehäuseteil eine Leuchtdiode und eine Laserdiode als sekundäre Leuchten aufweist und der sekundäre Schalter so angeordnet ist, daß er wahlweise die Leuchtdiode, die Laserdiode oder beide gemeinsam kurzschließt.

6. Taschenlampe nach einem der vorhergehenden Ansprüche,
**dadurch gekennzeichnet, daß**
das als Abschlußkappe ausgebildete Gehäuseteil ein Federelement (12) als sekundären Schalter aufweist, welcher im Abstand zur Kontaktfläche des Gehäuseteiles bezüglich des restlichen Gehäuses angeordnet ist und bei Gegeneinanderpressen des Gehäuseteiles mit dem restlichen Gehäuse in elektrisch leitenden Kontakt zum Gehäuseteil gerät und wobei die sekundäre Leuchte einerseits mit dem Federelement (12) und andererseits mit dem Grundkörper des Gehäuseteiles in Verbindung steht.

7. Taschenlampe nach einem der vorhergehenden Ansprüche,
**dadurch gekennzeichnet, daß**
der Grundkörper des als Abschlußkappe ausgebildeten Gehäuseteiles topfförmig ausgebildet ist mit einem darin aufgenommenen elektrisch leitenden Einsatz (9), der ein Kontaktelement, insbesondere eine Spiralfeder (7), zum Kontaktieren der Batterie aufweist und gegenüber dem Grundkörper des Gehäuses im nicht mit dem Gehäuse festverbundenen Zustand isoliert ist und mit dem Federelement (12) in Verbindung steht.

8. Taschenlampe nach einem der vorhergehenden Ansprüche, wobei das Gehäuseteil die Endkappe des rohrförmigen Gehäuses einer Stablampe ist,
**dadurch gekennzeichnet, daß**
das Gehäuseteil aus einem Grundkörper (34) besteht, der mit dem rohrförmigen Gehäuse fest verbindbar, insbesondere verschraubbar ist, und aus einer Dreheinheit, in der insbesondere die Sekundärleuchten (40a, ...) angeordnet sind und wobei die Dreheinheit als Sekundärschalter (43) zum Schalten der Sekundärleuchten (42a, 42b, ...) dient.

9. Taschenlampe nach einem der vorhergehenden Ansprüche,
**dadurch gekennzeichnet, daß**
die Dreheinheit eine Kappe (31 ) umfaßt, die das stirnseitige Endteil des Gehäuseteiles und des rohrförmigen Gehäuses bildet.

10. Taschenlampe nach einem der vorhergehenden Ansprüche,
**dadurch gekennzeichnet, daß**
der Grundkörper hülsenförmig, insbesondere topfförmig, ausgebildet ist und an einem offenen Ende insbesondere ein Außengewinde (36) umfaßt, welches in das entsprechende Innengewinde am Ende des rohrförmigen Gehäuses einschraubbar ist.

11. Taschenlampe nach Anspruch 8,
**dadurch gekennzeichnet, daß**
die Dreheinheit eine Kappe (31) umfaßt, die auf dem stirnseitigen freien Ende des Grundkörpers (34) sitzt und diese insbesondere überlappt und in der geschlossenen Stirnseite wenigstens eine Öffnung (46a, 46b, ...) zum Austreten der in der Kappe (31) untergebrachten wenigstens einen Sekundärleuchte (42a, 42b, ...).

12. Taschenlampe nach Anspruch 11,
**dadurch gekennzeichnet, daß**
im Inneren der Kappe (31) und als Dreheinheit drehfest mit dieser Verbunden eine Drehplatte (38) sowie eine Leiterplatte (35) angeordnet ist, wobei die Leiterplatte die wenigstens eine Sekundärelektronik (45a, 45b, ...) für die Sekundärleuchten (42a, 42b, ...) trägt und insbesondere die Drehplatte (38) axial näher am freien Ende der Kappe (31) quer zur Längserstreckung der Kappe (31) angeordnet ist gegenüber der Leiterplatte (35) und eine Zentralöffnung (40) aufweist, über welche die Drehplatte (38) mittels einer Schraube (41) axial fest, jedoch drehbar mit dem Grundkörper (34), insbesondere dessen Stimwand, verschraubt ist.

13. Taschenlampe nach einem der vorhergehenden Ansprüche,
**dadurch gekennzeichnet, daß**
die Drehplatte (38) ein bogenförmig, konzentrisch zur Zentralöffnung (4) angeordnetes Langloch (38a) aufweist, durch welches hindurch ein in axialer Richtung verlaufender Kontaktstift (37) von Grundkörper (34) aus kommend die Drehplatte (38) durchdringt und die der Drehplatte (38) zugewandte Stirnfläche der Leiterplatte (35) kontaktiert, welche dort entsprechende, elektrisch leitende separate Schaltkontakte (43a, 43b, ...) trägt.

14. Taschenlampe nach einem der vorhergehenden Ansprüche,
**dadurch gekennzeichnet, daß**
der Laserdiode eine Anschaltelektronik (23) vorgeschaltet ist, und insbesondere die Anschaltelektronik (23) am Grunde der Ausnehmung in dem topfförmigen Gehäuseteil angeordnet ist.

15. Taschenlampe nach einem der vorhergehenden Ansprüche,
**dadurch gekennzeichnet, daß**
die sekundäre Leuchte in dem Boden des topfförmigen Gehäuseteiles in einer Durchgangsöffnung angeordnet ist, die die Außenseite des Bodens mit dem inneren Freiraum des topfförmigen Gehäuseteiles verbindet.

16. Taschenlampe nach einem der vorhergehenden Ansprüche,
**dadurch gekennzeichnet, daß**
die sekundäre Leuchte mit dem Controller zum Stromkreis der primären Leuchte seriell geschaltet ist und die sekundären Leuchten parallel am Controller angeschlossen sind.

17. Taschenlampe nach Anspruch 16,
**dadurch gekennzeichnet, daß**
sowohl der sekundäre Schalter (43') als auch die Auswahl unter mehreren zur Verfügung stehenden sekundären Leuchten (42a, 42b, ..) durch einen gemeinsamen, insbesondere einzigen, Taster (51) erfolgt, welcher insbesondere zentral in der heckseitigen Stirnfläche der Kappe (31) angeordnet ist.

## Claims

1. Pocket light with a housing portion (5) having a primary lamp(15), a primary switch (16) a housing portion (14) for closing the housing (5) which has at least one secondary lamp (11, 18, 42) and a secondary switch (12) for switching the secondary lamp (12) on and off, wherein
- the at least one secondary lamp (11, 18, 42) is connected in the circuit of the primary lamp (15) in series therewith and the secondary switch (12) in the closed condition short-circuits the secondary lamp (11, 18, 42),
**characterised in that**
- the at least one secondary lamp (11, 18, 42) has at a maximum a tenth of the power demand of the primary lamp (15), and that
- the at least one secondary lamp (11, 18, 42) is a light emitting diode.

2. Pocket light as set forth in claim 1
**characterised in that** the at least one secondary lamp is a lamp with a maximum of a fiftieth of the power demand of the primary lamp.

3. Pocket light as set forth in one of the preceding claims
**characterised in that** all lamp means are supplied with power from a common dc source, in particular a battery.

4. Pocket light as set forth in one of the preceding claims
**characterised in that** the housing is a tubular housing and the primary lamp is arranged at the one end of the tubular housing and the housing portion represents an intermediate portion between the tubular housing and the closure cap at the rear end of the housing.

5. Pocket light as set forth in one of the preceding claims
**characterised in that** the housing portion has a light emitting diode and a laser diode as secondary lamps and the secondary switch is so arranged that it selectively short-circuits the light emitting diode or the laser diode or short-circuits both jointly.

6. Pocket light as set forth in one of the preceding claims
**characterised in that** the housing portion which is in the form of a closure cap has a spring element (12) as a secondary switch which is arranged at a spacing relative to the contact surface of the housing portion with respect to the rest of the housing and when the housing portion is pressed against the remaining housing comes into electrically conductive contact with the housing portion, and wherein the secondary lamp is connected on the one hand to the spring element (12) and on the other hand to the main body of the housing portion.

7. Pocket light as set forth in one of the preceding claims
**characterised in that** the main body of the housing portion which is in the form of a closure cap is of a cup-shaped configuration with an electrically conductive insert (9) which is accommodated therein and which has a contact element, in particular a coil spring (7), for contacting of the battery and which is insulated with respect to the main body of the housing in the condition of not being fixedly connected to the housing, and is connected to the spring element (12).

8. Pocket light as set forth in one of the preceding claims wherein the housing portion is the end cap of the tubular housing of a tubular light,
**characterised in that** the housing portion comprises a main body (34) which can be fixedly connected to and in particular screwed to the tubular housing and a rotary unit in which in particular the secondary lamps (40a, ...) are arranged and wherein the rotary unit serves as a secondary switch (43) for switching the secondary lamps (42a, 42b, ...).

9. Pocket light as set forth in one of the preceding claims
**characterised in that** the rotary unit includes a cap (31) which forms the end part of the housing portion and of the tubular housing.

10. Pocket light as set forth in one of the preceding claims
**characterised in that** the main body is of a sleeve-shaped configuration, in particular a cup-shaped configuration, and at an open end includes in particular a male screwthread (36) which can be screwed into the corresponding female screwthread at the end of the tubular housing.

11. Pocket light as set forth in claim 8
**characterised in that** the rotary unit includes a cap (31) which is carried on the free end of the main body (34) and in particular overlaps same and in the closed end at least one opening (46a, 46b, ...) for the emergence of the at least one secondary lamp (42a, 42b, ...) disposed in the cap (31).

12. Pocket light as set forth in claim 11
**characterised in that** arranged in the interior of the cap (31) and non-rotatably connected thereto as a rotary unit are a rotary plate (38) and a circuit board (35), wherein the circuit board carries the at least one secondary electronic device (45a, 45b, ...) for the secondary lamps (42a, 42b, ...) and in particular the rotary plate (38) is arranged axially closer to the free end of the cap (31) transversely with respect to the longitudinal extent of the cap (31) with respect to the circuit board (35) and has a central opening (40) by way of which the rotary plate (38) can be screwed axially fixedly but rotatably to the main body (34), in particular the end wall thereof, by means of a screw (41).

13. Pocket light as set forth in one of the preceding claims
**characterised in that** the rotary plate (38) has a slot (38a) which is arranged arcuately and concentrically with respect to the central opening (4) and through which a contact pin (37) extending in the axial direction and coming from the main body (34) passes through the rotary plate (38) and contacts the face of the circuit board (35) which is towards the rotary plate (38) and which carries there corresponding, electrically conductive separate switching contacts (43a, 43b, ...).

14. Pocket light as set forth in one of the preceding claims
**characterised in that** an electronic switching device (23) is connected upstream of the laser diode and in particular the electronic switching device (23) is arranged at the bottom of the opening in the cup-shaped housing portion.

15. Pocket light as set forth in one of the preceding claims
**characterised in that** the secondary lamp is arranged in the bottom of the cup-shaped housing portion in a through opening which connects the outside of the bottom to the internal free space of the cup-shaped housing portion.

16. Pocket light as set forth in one of the preceding claims
**characterised in that** the secondary lamp is connected to the controller in series with the circuit of the primary lamp and the secondary lamps are connected in parallel to the controller.

17. Pocket light as set forth in claim 16 **characterised in that** both the secondary switch (43') and also the choice among a plurality of available secondary lamps (42a, 42b, ...) is effected by a common, in particular single button (51) which is arranged in particular centrally in the tail face of the cap (31).

## Revendications

1. Lampe de poche comprenant un boîtier (5), une première ampoule primaire (15), un interrupteur primaire (16), une partie de boîtier (14), qui présente une ampoule secondaire (11, 18, 42), pour la fermeture du boîtier (5), ainsi qu'un interrupteur secondaire (12) pour allumer et éteindre l'ampoule secondaire (12),
- au moins une ampoule secondaire (11, 18, 42) étant montée dans le circuit de courant de l'ampoule primaire (15) en série avec cette dernière et l'interrupteur secondaire (12) court-circuitant à l'état fermé l'ampoule secondaire (11, 18, 42), **caractérisée en ce que**
- au moins une ampoule secondaire (11, 18, 42) présente au maximum un dixième de la consommation de courant de l'ampoule primaire (15) et **en ce que**
- au moins une ampoule secondaire (11, 18, 42) est une diode lumineuse.

2. Lampe de poche, selon la revendication 1, **caractérisée en ce qu'**au moins une ampoule secondaire est une ampoule avec au maximum un cinquantième de la consommation de courant électrique de l'ampoule primaire.

3. Lampe de poche selon l'une des revendications précédentes, **caractérisée en ce que** toutes les lampes sont alimentées en énergie par une source commune de courant continu, en particulier une batterie.

4. Lampe de poche selon l'une des revendications précédentes, **caractérisée en ce que** le boîtier est un boîtier tubulaire et l'ampoule primaire est disposée sur une face avant du boîtier tubulaire et **en ce que** la partie de boîtier représente un élément intercalaire entre le boîtier tubulaire et le couvercle arrière de fermeture du boîtier.

5. Lampe de poche selon l'une des revendications précédentes, **caractérisée en ce que** la partie de boîtier présente une diode lumineuse et une diode laser en tant qu'ampoule secondaire et **en ce que** l'interrupteur secondaire est disposé de sorte qu'il court-circuite au choix la diode lumineuse, la diode laser ou les deux ensemble.

6. Lampe de poche selon l'une des revendications précédentes, **caractérisée en ce que** la partie de boîtier réalisée comme un couvercle de fermeture présente un élément formant ressort (12) en tant qu'interrupteur secondaire, lequel est disposé à distance de la surface de contact de la partie de boîtier par rapport au reste du boîtier et lequel, par pression réciproque de la partie de boîtier avec le boîtier restant, entre en contact électriquement conducteur avec le boîtier électrique, et l'ampoule secondaire étant d'une part reliée à l'élément formant ressort (12) et d'autre part au corps de base de la partie de boîtier.

7. Lampe de poche selon l'une des revendications précédentes, **caractérisée en ce que** le corps de base de la partie de boîtier formant couvercle de fermeture a une forme de creuset avec un insert (9) conducteur électriquement et logé à l'intérieur qui présente un élément formant contact, en particulier un ressort hélicoïdal (7) pour l'entrée en contact avec la batterie et qui est isolé par rapport au corps de base du boîtier à l'état non relié fixement au boîtier et qui est relié à l'élément ressort (12).

8. Lampe de poche selon l'une des revendications précédentes, la partie de boîtier étant le couvercle d'extrémité du boîtier tubulaire d'une lampe torche, **caractérisée en ce que** la partie de boîtier se compose d'un corps de base (34) qui peut être relié fixement au boîtier tubulaire, en particulier peut être vissé et d'une unité rotative dans laquelle sont disposées en particulier les ampoules secondaires (40a,...) et l'unité rotative servant d'interrupteur secondaire (43) pour allumer les ampoules secondaires (42a, 42b),...).

9. Lampe de poche selon l'une des revendications précédentes, **caractérisée en ce que** l'unité rotative comprend un couvercle (31) qui forme la partie finale en face avant de la partie de boîtier et du boîtier tubulaire.

10. Lampe de poche selon l'une des revendications précédentes, **caractérisée en ce que** le corps de base a une forme de manchon, en particulier une forme de creuset et comporte, à une extrémité ouverte, en particulier un filetage extérieur (36) qui peut être vissé dans le filet intérieur correspondant à l'extrémité du boîtier tubulaire.

11. Lampe de poche selon la revendication 8, **caractérisée en ce que** l'unité rotative comprend un couvercle (31) qui repose sur l'extrémité libre en face avant du corps de base (34) et en particulier la chevauche, et dans la face avant fermée au moins une ouverture (46a, 46b,....) pour la sortie d'au moins une ampoule secondaire (42a, 42b,..) logée dans le couvercle (31).

12. Lampe de poche selon la revendication 11, **caractérisée en ce qu'**à l'intérieur du couvercle (31) sont disposées une plaque rotative (38) et une carte à circuit imprimé (35) formant une unité de rotation rigide à la torsion et reliée au couvercle, la carte de circuit imprimé portant au moins une électronique secondaire (45a, 45b,...) pour les ampoules secondaires (42a, 42b,..) et en particulier la plaquette rotative (38) étant disposée axialement plus près sur l'extrémité libre du couvercle (31) transversalement à l'extension longitudinale du couvercle (31) en face de la carte à circuit imprimé (35) et présentant une ouverture centrale (40) par laquelle la plaquette rotative (38) est vissée au moyen d'une vis (41) axialement de manière fixe cependant rotative avec le corps de base (34), en particulier avec la paroi avant de ce dernier.

13. Lampe de poche selon l'une des revendications précédentes, **caractérisée en ce que** la plaquette rotative (38) présente un trou oblong (38a) disposé en forme d'arc et concentrique par rapport à l'ouverture centrale (4), trou à travers lequel passe une tige de contact (37) s'étendant dans le sens axial en venant du corps de base (34) pour traverser la plaquette rotative (38) et entre en contact avec la surface avant de la carte à circuit imprimée (35), tournée vers la plaquette rotative (38) , laquelle carte portant des contacts de commutation correspondants électriquement conducteurs (43a, 43b, ...).

14. Lampe de poche selon l'une des revendications précédentes, **caractérisée en ce qu'**une diode laser est montée en aval d'une électronique de déclenchement (23) et en particulier l'électronique de déclenchement (23) est disposée au fond de la cavité dans la partie de boîtier en forme de creuset.

15. Lampe de poche selon l'une des revendications précédentes, **caractérisée en ce que** l'ampoule secondaire est disposée au fond de la partie de boîtier en forme de creuset dans une ouverture de passage qui relie la face externe du fond à l'espace interne libre de la partie de boîtier en forme de creuset.

16. Lampe de poche selon l'une des revendications précédentes, **caractérisée en ce que** l'ampoule secondaire est montée en série avec le contrôleur du circuit électrique de l'ampoule secondaire et **en ce que** les ampoules secondaires sont montées en parallèle sur le contrôleur.

17. Lampe de poche selon la revendication 16, **caractérisée en ce qu'**autant l'interrupteur secondaire (43') que le choix entre plusieurs ampoules secondaires disponibles (42a, 42b,...) s'effectue par un bouton poussoir commun en particulier unique lequel est disposé en particulier au milieu dans la surface frontale en face arrière du couvercle (31).
